**Europäisches Patentamt**

**European Patent Office**

**Office européen des brevets**

(19)

(11) **EP 0 694 577 A2**

## (12) EUROPÄISCHE PATENTANMELDUNG

(43) Veröffentlichungstag:
31.01.1996 Patentblatt 1996/05

(51) Int. Cl.$^6$: **C08L 57/06**
// (C08L57/06, 57:06)

(21) Anmeldenummer: 95111500.5

(22) Anmeldetag: 21.07.1995

(84) Benannte Vertragsstaaten:
**BE DE ES FR GB IT NL**

(30) Priorität: **27.07.1994 DE 4426563**

(71) Anmelder: **BASF AKTIENGESELLSCHAFT**
**D-67056 Ludwigshafen (DE)**

(72) Erfinder:
• **Wistuba, Eckehardt, Dr.**
**D-67098 Bad Dürkheim (DE)**

• **Dittrich, Uwe, Dr.**
**D-67056 Ludwdigshafen (DE)**
• **Mathauer, Klemens, Dr.**
**D-67061 Ludwigshafen (DE)**
• **Endisch, Stefan**
**D-64560 Riedstadt (DE)**
• **Neutzner, Josef, Dr.**
**D-67434 Neustadt (DE)**

(54) **Beschichtungs- oder Dichtungsmassen, enthaltend eine Mischung von Copolymerisaten**

(57)   1. Mischung, enthaltend

A) ein Copolymerisat, im wesentlichen aufgebaut aus

a) 30 bis 99,99 Gew.-% Hauptmonomeren ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
b) 0,01 bis 5 Gew.-% hydrolisierbaren Siliciumverbindungen
c) 0 bis 69,99 Gew.-% von a) und b) verschiedenen Monomeren, wobei der Anteil von Monomeren mit Carbonsäuregruppen unter 5 Gew.%, bezogen auf das Copolymerisat beträgt, sich die Gewichtsangaben auf das Copolymerisat beziehen und sich zu 100 Gew.-% addieren, und

B) ein Copolymerisat, welches zu mindestens 5 Gew.-% aus ethylenisch ungesättigten Monomeren, welche mindestens eine Carbonsäuregruppe enthalten, aufgebaut ist.

EP 0 694 577 A2

**Beschreibung**

Die Erfindung betrifft eine

1. Mischung, enthaltend

A) ein Copolymerisat, im wesentlichen aufgebaut aus

a) 30 bis 99,99 Gew.-% Hauptmonomeren ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,
b) 0,01 bis 5 Gew.-% hydrolisierbaren Siliciumverbindungen
c) 0 bis 69,99 Gew.-% von a) und b) verschiedenen Monomeren, wobei der Anteil von Monomeren mit Carbonsäuregruppen unter 5 Gew.%, bezogen auf das Copolymerisat beträgt, sich die Gewichtsangaben auf das Copolymerisat beziehen und sich zu 100 Gew.-% addieren, und

B) ein Copolymerisat, welches zu mindestens 5 Gew.-% aus ethylenisch ungesättigten Monomeren, welche mindestens eine Carbonsäuregruppe enthalten, aufgebaut ist.

Aus der EP-B-35 332 sind Fliesenkleber bekannt, welche als Polymerbestandteil Copolymerisate von Acrylverbindungen, vinylaromatischen Verbindungen und ungesättigten Siliciumverbindungen enthalten. In der EP-A-366 969 werden Dichtungsmassen und Klebstoffe für keramische Fliesen beschrieben, welche zu 3 bis 30 Gew.-% aus einem Polymeren mit einem Gehalt von Mercaptosilanen bestehen.

Für viele Anwendungen müssen hergestellte Verklebungen bzw. Abdichtungen und Beschichtungen möglichst wasserfest sein. Auch bei ständiger Einwirkung z.B. von Luftfeuchtigkeit oder Spritzwasser sollte die Festigkeit, insbesondere die Scherfestigkeit als Maß für die Kohäsion, nur wenig abnehmen.

Dichtungsmassen oder Klebstoffe für keramische Fliesen enthalten im allgemeinen große Mengen an Füllstoffen, z.B. Calciumcarbonat.

Die Füllbarkeit von Fliesenklebern ist begrenzt. Wird der Polymeranteil in der fertig formulierten Klebstoffmasse zu stark reduziert, lassen sich die so hergestellten Kleber oft nicht homogen mischen und verarbeiten. Bei solchen Formulierungen, wo eine gute Verarbeitbarkeit gelingt, reichen die anwendungstechnischen Eigenschaften wie Wasserfestigkeit und Flexibilität nicht mehr aus. Mit den bisher bekannten Systemen, die in den genannten Patentschriften beschrieben sind, lassen sich Systeme, die zugleich allen anwendungstechnischen Anforderungen genügen, nicht herstellen.

Aufgabe der vorliegenden Erfindung war es, Copolymerisate zu finden, die sich besonders für hochgefüllte Kleb-, Dicht-, und Beschichtungsmassen eignen.

Demgemäß wurde die eingangs definierte Mischung gefunden.

Es hat sich überraschenderweise gezeigt, daß sich durch Kombination von Copolymerisaten mit organischen Silylethergruppen und säurereichen Copolymerisaten die Scherfestigkeit hochgefüllter Fliesenklebstoffe nach Wasserlagerung deutlich verbessern läßt.

Die Copolymerisate A) enthalten 30 bis 99,99, bevorzugt 70 bis 99,9 und besonders bevorzugt 90 bis 99,7 Gew.-%, bezogen auf das Copolymerisat, sogenannte Hauptmonomere a) ausgewählt aus $C_1$-$C_{20}$-Alkyl(meth)acrylaten, Vinylestern, von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen.

Als Hauptmonomere zu nennen sind z.B. (Meth)acrylsäurealkylester mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und ein oder zwei olefinischen Doppelbindungen seien Butadien, Isopren, und Chloropren, sowie Ethylen, Propylen und Isobutylen genannt.

Die Hauptmonomeren werden auch vorzugsweise im Gemisch eingesetzt.

Vinylaromatische Verbindungen wie Styrol werden z.B. häufig im Gemisch mit $C_1$-$C_{20}$-Alkyl(meth)acrylaten, insbesondere mit $C_1$-$C_8$-Alkyl(meth)acrylaten, oder nicht aromatischen Kohlenwasserstoffen wie Isopren oder vorzugsweise Butadien eingesetzt.

Das Copolymerisat enthält weiterhin 0,01 bis 5 Gew.-%, vorzugsweise 0,1 bis 3 Gew.-%, besonders bevorzugt 0,3 bis 2 Gew.-%, bezogen auf das Copolymerisat, hydrolysierbare Siliciumverbindungen. Bei den hydrolisierbaren Siliciumverbindungen kann es sich z. B. um

$b_1$) ethylenisch ungesättigte, copolymerisierbare Siliciumverbindung und/oder
$b_2$) ethylenisch gesättigte Siliciumverbindungen, welche als Regler bei der Copolymerisation an das Polymergerüst gebunden werden,

handeln.

Besonders bevorzugt ist ein Gemisch der Verbindungen b) z. B. im Gewichtsverhältnis $b_1$:$b_2$ von 0,01:1 bis 1:0,01. Vorzugsweise beträgt das Verhältnis 0,01:1 bis 1:1, ganz besonders bevorzugt 0,02:1 bis 0,4:1.

Vorzugsweise handelt es sich bei den Siliciumverbindungen $b_1$) um solche der Formel

$$R^3\text{-}SiR^1_n\text{-}(OR^2)_{3-n} \qquad I$$

und bei den Siliciumverbindungen $b_2$) um solche der Formel

$$X\text{-}R^4\text{-}SiR^1_n\text{-}(OR^2)_{3-n} \qquad II,$$

worin $R^1$ für einen $C_1$-$C_8$-Alkylrest, $R^2$ für einen $C_1$-$C_8$-Alkyl- oder einen $C_2$-$C_8$-Acylrest, welche durch ein oder zwei weitere $C_1$-$C_4$-Alkoxygruppen substituiert sein können, $R^3$ für einen Rest mit 2 bis 8 C-Atomen und einer ethylenisch ungesättigten Gruppe, $R^4$ für einen $C_1$-$C_{14}$-Alkylenrest, und X für eine Mercaptogruppe steht und n = 0, 1 oder 2 ist.

Die Reste $R^1$ bis $R^4$ in Formeln I und II haben vorzugsweise folgende Bedeutung:

$R^1$: eine $C_1$-$C_4$-Alkylgruppe
$R^2$: eine $C_1$-$C_4$-Alkylgruppe
$R^3$: eine Vinylgruppe, Allylgruppe oder insbesondere eine (Meth)acryloxy-$C_1$-$C_4$-alkylgruppe
$R^4$: eine n-Mercapto-$C_1$-$C_4$-alkylgruppe.

Genannt seien z.B.
3-Acryloxypropyltriethoxysilan
3-Methacryloxypropylmethyldiethoxysilan
3-Methacryloxypropyldimethylethoxysilan
3-Methacryloxypropyltris-(2-methoxyethoxy)silan
3-Mercaptpropyltrimethoxysilan
3-Mercaptopropyltriethoxysilan
3-Methacryloxypropyl-trimethoxysilan.
Vinyltrimethoxysilan
Vinyltris(methoxyethoxy)silan

Weiterhin kann das Copolymerisat noch von a) und b) verschiedene Monomere c) enthalten. Diese sind in Mengen von 0 bis 69,99, vorzugsweise 0 bis 29,9 und besonders bevorzugt 0 bis 9,7 Gew.-%, bezogen auf das Copolymerisat, enthalten.

Als solche zu nennen sind z.B. Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl-(meth)acrylat, Phenylpropyl(meth)acrylat oder Acrylsäureester von heterocyclischen Alkoholen wie Furfuryl(meth)acrylat genannt.

Darüber hinaus kommen noch Monomere mit Amino- oder Amidgruppen wie (Meth)acrylamid, sowie deren am Stickstoff mit $C_1$-$C_4$-Alkyl substituierten Derivate, in Betracht.

Von Bedeutung sind insbesondere hydroxyfunktionelle Monomere, z.B. (Meth)acrylsäure-$C_1$-$C_{15}$-alkylester, welche durch ein oder zwei Hydroxygruppen substituiert sind. Insbesondere von Bedeutung als hydroxyfunktionelle Comonomere sind (Meth)acrylsäure-$C_2$-$C_8$-hydroxyalkylester, wie n-Hydroxyethyl-, n-Hydroxypropyl- oder n-Hydroxybutyl(meth)acrylat.

Monomere mit Carbonsäuregruppen, z.B. Acrylsäure, Methacrylsäure, Itaconsäure, Maleinsäure- oder Fumarsäure werden gegebenenfalls in Mengen kleiner 5 Gew.-%, bezogen auf das Copolymerisat vorzugsweise in Mengen von 0 bis 2 Gew.-% mitverwendet. Entsprechendes gilt vorzugsweise auch für Monomere mit Carbonsäureanhydridgruppen.

Die Herstellung des Copolymerisats A) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat A) durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation neben den Siliciumverbindungen $b_2$) weitere Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan, sie können z.B. in Mengen von 0 bis 0,5 Gew.-%, bezogen auf das Copolymerisat, zusätzlich eingesetzt werden.

Die Art und Menge der Comonomeren wird vorzugsweise so gewählt, daß das erhaltene Copolymerisat eine Glasübergangstemperatur von -60 und +140°C, vorzugsweise -60 und +100°C aufweist. Die Glasübergangstemperatur des Copolymerisats wird durch Differentialthermoanalyse oder Differential Scanning Calorimetrie nach ASTM 3418/82, bestimmt.

Das zahlenmittlere Molekulargewicht $M_n$ beträgt vorzugsweise $10^3$ bis $5 \cdot 10^6$, besonders bevorzugt $10^5$ bis $2 \cdot 10^6$ (bestimmt durch Gelpermeationschromatographie mit Polystyrol als Standard).

Copolymerisat B) enthält mindestens 5 Gew.-% vorzugsweise mindestens 15 Gew.-%, besonders bevorzugt mindestens 40 Gew.-% an Monomeren mit mindestens einer Carbonsäuregruppe. Geeignete Monomere sind z. B. (Meth)acrylsäure, Itaconsäure, Fumarsäure oder Maleinsäure.

Weitere Bestandteile des Copolymerisats B) können die voranstehend genannten Hauptmonomeren a) oder auch weitere Monomere c) sein. Ein Gehalt an hydrolisierbaren Siliciumverbindungen b) ist im allgemeinen nicht notwendig und beträgt, soweit überhaupt vorhanden, vorzugsweise 0 bis 3 Gew.-%.

Bevorzugt besteht Copolymerisat B) neben den Carbonsäuregruppen enthaltenden Monomeren im wesentlichen aus den Hauptmonomeren a) insbesondere aus Styrol oder (Meth)acrylsäurealkylestern.

Der Gehalt an Monomeren mit einer Carbonsäure liegt hierbei im allgemeinen unter 95 und vorzugsweise unter 80 Gew.-%, bezogen auf B).

Als Copolymerisat B) sind auch Homopolymerisate von Carbonsäuregruppen enthaltenden Monomeren, z. B. Poly(meth)acrylsäure geeignet.

Für die Herstellung von Copolymerisat B) gilt das voranstehend bezüglich der Herstellung von Copolymerisat A) Gesagte.

Das zahlenmittlere Molekulargewicht $M_n$ des Copolymerisats B) beträgt vorzugsweise 500 bis 200.000 und besonders bevorzugt 500 bis 100.000 und besonders bevorzugt 500 bis 10.000 (Gelpermeationschromatographie, Polystyrol als Standard).

Copolymerisat B) ist in der erfindungsgemäßen Mischung vorzugsweise in Mengen von 1 bis 60 Gew.-%, besonders bevorzugt von 5 bis 40 Gew.-%, bezogen auf Copolymerisat A) enthalten.

Mischungen der Copolymerisate A) und B) können schon bei der Herstellung der Copolymerisate erhalten werden, z. B. indem die Polymerisation des Copolymerisats A) oder B) in Gegenwart des bereits hergestellten, anderen Copolymerisats erfolgt. Das bereits hergestellte Copolymerisat kann dabei vorgelegt oder auch zudosiert werden.

Des weiteren können zur Herstellung der Mischungen die Copolymerisate in Form ihrer Dispersionen oder z. B. auch als sprühgetrocknete Pulver gegebenenfalls auch gleichzeitig mit anderen Bestandteilen gemischt werden. Copolymerisat B) kann z. B. auch erst kurz vor der Verarbeitung einer Zubereitung des Copolymerisats A), welche noch weitere Bestandteile enthält, zugesetzt werden.

Vorzugsweise liegt Copolymerisat A) in Form einer wäßrigen Dispersion vor und Copolymerisat B) wird dieser Dispersion vor, während oder nach der Herstellung des Copolymerisats A) zugesetzt.

Mischungen der Copolymerisate A) und B) eignen sich für alle Verwendungen, bei denen eine gute Wasserfestigkeit gewünscht wird. Sie können z.B. als oder in Beschichtungsmassen, Dichtungsmassen oder Klebstoffen Verwendung finden.

Die erfindungsgemäßen Mischungen eignen sich zum Beispiel zum Beschichten von mineralischen Materialien, insbesondere Betondachsteinen. Sie verhindern in hervorragender Weise Ausblüherscheinungen und weisen eine erhöhte Wasserfestigkeit auf.

Sie können z.B. auch in Haftklebstoffen, Verpackungs- und Kaschierklebstoffen eingesetzt werden.

Die erfindungsgemäßen Mischungen eignen sich in besonderer Weise auch für Beschichtungs-, Dichtungs- oder Klebstoffmassen mit einem hohen Gehalt, z.B. mindestens 20 Gew.-%, vorzugsweise 40 bis 90 Gew.-%, bezogen auf die Beschichtungs-, Dichtungs- oder Klebstoffmasse, an anorganischen Füllstoffen.

Als Füllstoffe werden mit Vorteil Aluminiumsilicate, Quarz, gefällte oder pyrogene Kieselsäure, Leicht- und Schwerspat, Talcum, Dolomit und besonders bevorzugt Calciumcarbonat zugesetzt. Weiterhin kommen als Füllstoffe insbesondere für als Dichtungsmassen zu verwendende Zubereitungen, farbgebende Pigmente in Betracht. Als Weißpigmente werden bevorzugt Titanweiß, Bleiweiß, Zinkweiß, Lithophone und Antimonweiß, als Schwarzpigmente Eisenoxidschwarz, Manganschwarz, Cobaltschwarz, Antimonschwarz und Ruß, als Buntpigmente z.B. Eisenoxidpigmente, Chromgelb, Mennige, Zinkgelb, Zinkgrün, Pinkrot, Cadmiumrot, Cobaltblau, Berliner Blau, Ultramarin, Manganviolett, Cadmiumgelb, Molybdatorange oder Strontiumgelb eingesetzt. Im allgemeinen werden die Füllstoffe in feiner Körnung zugegeben. Die durchschnittliche Korngröße als arithmetisches Mittel der jeweils größten Durchmesser beträgt bevorzugt 0,5 bis 200 $\mu$m.

Die Beschichtungs-, Dichtungs- und Klebstoffmassen können weitere Additive, z.B. als äußere Weichmacher geeignete niedermolekulare organische Substanzen enthalten.

Bevorzugt werden als letztere Adipinsäureester wie Di-2-ethylhexyladipat, Di-iso-octyladipat oder Di-iso-decyladipat, Phthalsäureester wie Di-n-butylphthalat, Diisoneptylphthalat, Di-iso-octylphthalat oder Di-methylglycolphthalat, Essigsäureester eines Diethylenglycolmonoalkylethers, dessen Alkylgruppe 2 bis 5 C-Atome enthält, Polyisobutene eines zahlenmittleren Molekulargewichtes von 700 bis 1500 sowie oxalkylierte Alkylphenole (Alkylrest: $C_8$ bis $C_{14}$), die durch Addition von 5 bis 10 mol Ethylenoxid und/oder Propylenoxid an 1 mol Alkylphenol erhalten werden, eingesetzt.

Die erfindungsgemäßen Mischungen eignen sich in ganz besonderer Weise für Dichtungsmassen und Klebstoffe für keramische Fliesen sowie für Beschichtungsmassen für mineralische Substrate, insbesondere Betondachsteine, vorteilhaft sind insbesondere wäßrige Dispersionen der Copolymerisate, wie sie z.B. bei der Emulsionspolymerisation erhalten werden.

Soweit im nachfolgenden von Mischungen A) + B) die Rede ist, sind Mischungen mit nur Copolymerisaten A) und B) als Bestandteile gemeint, wobei die Menge an B) vorzugsweise in den oben angegebenen Gewichtsbereichen liegt.

Dichtungsmassen und Klebstoffe für keramische Fliesen enthalten bevorzugt

2 - 30 Gew.-% der Mischung A) + B)

40 - 95 Gew.-% anorganische Füllstoffe

0 - 5 Gew.-% Emulgator

0 - 15 Gew.-% äußere Weichmacher und

2 - 40 Gew.-% Wasser.

Besonders bevorzugt enthalten Klebstoffe für keramische Fliesen

2 - 25 Gew.-% der Mischung A) + B)

50 - 90 Gew.-% anorganische Füllstoffe

0 - 5 Gew.-% Emulgator

0 - 15 Gew.-% äußere Weichmacher und

7 - 30 Gew.-% Wasser.

Besonders bevorzugt enthalten Dichtungsmassen

15 - 30 Gew.-% der Mischung A) + B)

40 - 60 Gew.-% anorganische Füllstoffe

0 - 5 Gew.-% Emulgator

0 - 15 Gew.-% äußere Weichmacher und

15 - 25 Gew.-% Wasser.

Beschichtungsmassen für mineralische Untergründe enthalten bevorzugt:

10 - 55 Gew.-% der Mischung A) + B)

0 - 70 Gew.-%, vorzugsweise 20 - 60 Gew.-% anorganische Füllstoffe

0 - 5 Gew.-% Emulgator

0 - 15 Gew.-% äußere Weichmacher und

5 - 80 Gew.-% Wasser.

Die Gewichtsprozente beziehen sich jeweils auf die gesamte Masse und addieren sich zu 100 %.

Zur Verwendung in Dichtungsmassen eignen sich vorteilhafter Weise Copolymerisate A) mit einer Glasübergangstemperatur $T_g$ -60 bis +10°C, bevorzugt mit einer $T_g$ von -55 bis -5°C und für eine Verwendung als Klebstoffe für keramische Fliesen eignen sich vorteilhafterweise solche mit einer $T_g$ von -10 bis +40°, bevorzugt von 0 bis +30°C.

Zur Verwendung in Beschichtungsmassen für mineralische Substrate bzw. Untergründe, insbesondere Betondachsteinen, eignen sich vorteilhafterweise Copolymerisate A) mit einer Glasübergangstemperatur $T_g$ von -30 bis +50°C, bevorzugt von -15 bis +40°C.

Die $T_g$ wird dabei, wie bereits oben ausgeführt, gemäß ASTM D 3418-82 bestimmt. Der Fachmann kann die $T_g$ des Copolymerisats durch Wahl der Monomeren bestimmen und die sich einstellende $T_g$ vor der Copolymerisation mit Hilfe der Fox-Gleichung (T.G. Fox Bull. Am. Phys. Soc. (ser. II) 1, 123 (1956)) aus den $T_g$-Werten der Homopolymeren der eingesetzten Monomere in sehr guter Näherung abschätzen.

Weitere Hilfsmittel, welche den erfindungsgemäßen Mischungen im Fall der Verwendung als Beschichtungsmasse, Dichtungsmasse oder Klebstoffe, zugesetzt werden können sind z.B. Mittel zur Verbesserung ihrer Haftung wie Dihydrazinverbindungen und Zinktetraminkomplexe, z.B. Zinktetramincarbonat oder Zinktetraminacetat. Verdickungsmittel wie Methylhydroxypropylcellulose, schaumdämpfende Mittel und Konservierungsstoffe wie Fungizide. Insbesondere bei als Dichtungsmassen zu verwendenden Zubereitungen ist es empfehlenswert, den Zubereitungen 0,1 bis 1 Gew.-% Verdickungsmittel, bezogen auf die gesamte Dichtungsmasse, zuzugeben.

Die Herstellung der Beschichtungsmassen, Dichtungsmassen oder Klebstoffe kann z. B. durch Einrühren eines Füllstoffes und gegebenenfalls eines Weichmachers oder weiterer Hilfsmittel in eine 40 bis 70 gew.-%ige wäßrige Dispersion, die die erfindungsgemäße Mischung enthält, erfolgen. Um eine homogene Verteilung der Füllstoffe zu gewährleisten, können dabei 0,2 bis 0,6 Gew.-%, bezogen auf die Füllstoffe, an Netz- und Dispergiermitteln zugegeben werden. Mit Vorteil werden als Netz- und Dispergiermittel Ammonium- oder Alkalimetallsalze niedermolekularer Polyacrylsäuren sowie Polyphosphate wie Natriumhexametaphosphat eingesetzt.

Beispiele

Herstellung von Dispersionen von Copolymerisat A

4 Gew.-% von Zulauf 1 und 20 Gew.-% von Zulauf 2 wurden in die Vorlage gegeben und 15 Minuten bei 90°C anpolymerisiert. Zulauf 1 und 2 wurden in 3 Stunden zudosiert und dann wurde 2 Stunden nachpolymerisiert. Mit 25 gew.-%iger Ammoniaklösung wurde ein pH 7 eingestellt.

Vorlage:

385 g Wasser
2,86 g Na-Salz von ethoxyliertem (Ethoxylierungsgrad 25) und sulfatiertem p-Isooctylphenol (35 %ig)

Zulauf 1:

400 g Butylacrylat
470 g Styrol
100 g 2-Ethylhexylacrylat
30 g Acrylsäure
4 g Ammoniak (25 %ig)
54,3 g Na-Salz von ethoxyliertem (Ethoxylierungsgrad 25) und sulfatiertem p-Isooctylphenol (35 %ig)

Zulauf 2:

5 g Natriumperoxodisulfat
200 g Wasser
Die Herstellung der Dispersion D2-D3 erfolgte in entsprechender Weise, wobei Zulauf 1 die angegebene Menge Siliciumverbindungen (in g, Tabelle 1) enthielt.

Tabelle 1

| | Methacryloxypropyltrimethoxysilan | Mercaptopropyltrimethoxysilan |
|---|---|---|
| D1 | 0 | 0 |
| D2 | 0,1 | 0 |
| D3 | 0 | 0,5 |

Die Dispersionen D1 - D3 wurden jeweils mit einer ammoniakalischen Lösung des Copolymerisats B in Wasser gemischt. Copolymerisat B bestand aus 60 Gew.-% Styrol und 40 Gew.-% Acrylsäure ($M_n$ = 1.200).

Die Mengen wurden so gewählt, daß der Anteil des Copolymerisats B 14 Gew.-% (fest) bezogen auf 100 Gew.-% Copolymerisat A (fest) betrug.

Anwendungstechnische Prüfung

Mit den Dispersionen wurden nach folgender Rezeptur Fliesenklebstoffe formuliert (Teile sind Gewichtsteile):
181 Teile Wasser
10 Teile hydrophobierte Cellulose
100 Teile Mischungen D1-D3 gemäß Herstellungsbeispiel
5 Teile Copolymer aus Vinylpyrrolidon und Vinylpropionat als Verdicker
10 Teile Ester aus Essigsäure und Diethylenglycolmonobutylether
257 Teile Quarzsand
443 Teile hydrophobierte Kieselsäure

Die Prüfung der Fliesenkleber erfolgte im Scherversuch gemäß British Standard 5980

Substrat:
Bisquitfliesen 101 x 101 x 9 mm (Test Piece British Ceramic Research Ass.)
verklebte Fläche:
101 x 88 mm
Schichtdicke:
1 mm
Lagerung:
zunächst 7 Tage bei Raumtemperatur und zusätzlich 7 Tage in Wasser
Vorschubgeschwindigkeit der Prüfmaschine:
20 mm/min
Auswertung:
mittlere Scherkraft in kN (aus je drei Prüfkörpern)

Die ermittelten Prüfdaten sind in Tabelle 2 aufgeführt.

Tabelle 2

| Fliesenkleber mit Mischungen | D1 | D2 | D3 |
|---|---|---|---|
| Scherfestigkeit (kN) | 2,1 | 6,6 | 4,9 |

**Patentansprüche**

1.  Mischung, enthaltend

    A) ein Copolymerisat, im wesentlichen aufgebaut aus

a) 30 bis 99,99 Gew.-% Hauptmonomeren ausgewählt aus $C_1$-$C_{20}$-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden und aliphatischen Kohlenwasserstoffen mit 2 bis 8 C-Atomen und 1 oder 2 Doppelbindungen,

b) 0,01 bis 5 Gew.-% hydrolisierbaren Siliciumverbindungen

c) 0 bis 69,99 Gew.-% von a) und b) verschiedenen Monomeren, wobei der Anteil von Monomeren mit Carbonsäuregruppen unter 5 Gew.%, bezogen auf das Copolymerisat, beträgt, sich die Gewichtsangaben auf das Copolymerisat beziehen und sich zu 100 Gew.-% addieren, und

B) ein Copolymerisat, welches zu mindestens 5 Gew.-% aus ethylenisch ungesättigten Monomeren, welche mindestens eine Carbonsäuregruppe enthalten, aufgebaut ist.

2. Mischung gemäß Anspruch 1, wobei es sich bei den hydrolisierbaren Siliciumverbindungen um solche der Formel

$$R^3\text{-SiR}^1_n\text{-}(OR^2)_{3-n} \qquad I$$

oder um solche der Formel

$$X\text{-}R^4\text{-SiR}^1_n\text{-}(OR^2)_{3-n} \qquad II$$

worin $R^1$ für einen $C_1$-$C_8$-Alkylrest, $R^2$ für einen $C_1$-$C_8$-Alkyl- oder einen $C_2$-$C_8$-Acylrest, welche durch ein oder zwei weitere $C_1$-$C_4$-Alkoxygruppen substituiert sein können, $R^3$ für einen Rest mit 2 bis 8 C-Atomen und einer ethylenisch ungesättigten Gruppe, $R^4$ für einen $C_1$-$C_{14}$-Alkylenrest, und X für eine Mercaptogruppe steht und n = 0, 1 oder 2 ist, handelt.

3. Mischung gemäß Anspruch 1 oder 2, wobei die Glasübergangstemperatur $T_g$ des Copolymerisats A -60 bis +140°C beträgt.

4. Mischung gemäß einem der Ansprüche 1 bis 3, wobei das Copolymerisat A) als wäßrige Dispersion vorliegt.

5. Mischung gemäß einem der Ansprüche 1 bis 4, enthaltend bis zu 60 Gew.-% des Copolymerisats B), bezogen auf Copolymerisat A)

6. Mischung gemäß einem der Ansprüche 1 bis 5, wobei das Copolymerisat B) ein zahlenmittleres Molekulargewicht $M_n$ von 500 bis 200.000 hat.

7. Dichtungsmassen, enthaltend ein Copolymerisat A) und B) gemäß einem der Ansprüche 1 bis 6.

8. Klebstoffe, enthaltend ein Copolymerisat A) und B) gemäß einem der Ansprüche 1 bis 6.

9. Beschichtungsmassen, enthaltend ein Copolymerisat A) und B) gemäß einem der Ansprüche 1 bis 6.

10. Beschichtungs-, Dichtungsmassen oder Klebstoffe, enthaltend ein Copolymerisat A) und B) gemäß einem der Ansprüche 1 bis 6 und mindestens 20 Gew.-%, bezogen auf die Beschichtungs-, Dichtungsmasse oder Klebstoff, eines Füllstoffs.